# EUROPEAN PATENT APPLICATION

(11) **EP 3 216 345 A1**
(43) Date of publication of application: **13.09.2017**
(21) Application number: 17159700.8
(22) Date of filing: 07.03.2017
(51) Int. Cl.: A01K 97/12

(54) **DEVICE FOR APPLYING TENSION TO A FISHING LINE**

(30) Priority: 08.03.2016 GB 201604009
(71) Applicant: Drennan International Limited, Oxford, Oxfordshire OX4 2EX (GB)
(72) Inventor: DRENNAN, Peter, Oxford, Oxfordshire OX44 9HG (GB); FOX, Richard, Oxford, Oxfordshire OX4 2EX (GB)
(74) Representative: J A Kemp

(57) **Abstract**

A device (1) for applying tension to a fishing line (11) comprising a length of flexible material (2) having a first connector (3) at one end and a second connector (4) at the other end. The first connector is adapted for releasable attachment to a rod support (13) and the second connector is adapted for releasable connection to a bobbin (13) arranged to be suspended from the fishing line so as to apply tension to the line. The device is reversible so the first connector (3) can also be releasably connected to the bobbin (13) and the second connector (4) releasably secured to the rod support (13). The first and second connectors are formed of materials of different densities and/or having different weights so a different tension is applied to the line depending which way around the device is connected.

## Description

This invention relates to a device for applying tension to a fishing line, in particular a fishing line having a bite indicator for sensing movement of the line.

Bite sensors for sensing movement of a fishing line are known. It is desirable to apply tension to the line and one known way of doing this is to suspend a weight, eg bobbin therefrom. The bobbin is connected to a device comprising a length of flexible material, eg a chain or cord, with a first connector at one end and a second connector at the other end, the first connector is releasably attached to a support, typically a rod support, via a mounting component attached thereto, and the second connector is releasably connected to the bobbin which is arranged to be suspended from the fishing line so as to apply tension thereto. Movement of the bobbin due to movement of the fishing line provides a visual indication of a bite. In many cases, a sound indication is also provided by an electronic device mounted on the rod support which senses movement of the line relative to the support.

It is desirable to be able to adjust the tension applied to the line so as to adjust the sensitivity of the bite indicator, eg to accommodate for changes in wind velocity, water conditions etc and the pressure on the fishing line. One way of doing this is to provide separate add-on weights which can be attached to the bobbin or line. For fine adjustment, these may be as small as 2 grams and, traditionally, separate weights are added or subtracted as desired. As such add-on weights which are very small they can be difficult to manipulate in an angling environment and easily dropped or lost.

The present invention seeks to provide a device which enables the tension applied to the line to be adjusted more easily and with a reduced risk that parts are lost. The invention also seeks to simplify the construction of the device and/or reduce the need for multiple devices to cater for different conditions.

According to a first aspect of the invention, there is provided a device for applying tension to a fishing line comprising a length of flexible material having a first connector at one end and a second connector at the other end, the first connector being adapted for releasable attachment to a rod support and the second connector being adapted for releasable connection to a bobbin arranged to be suspended from the fishing line so as to apply tension thereto, the device being reversible so the first connector can also be releasably connected to the bobbin and the second connector releasably secured to the rod support, the first and second connectors being formed of materials having different densities and/or having different weights so a different tension is applied to the line depending which way around the device is connected.

Thus, by the simple expedient of manufacturing the connectors at either end of the line from different materials and/or of different weights, the tension applied to the fishing line can be altered by simply reversing the way the device is connected.

Preferably, one of the connectors is at least 3 grams heavier than the other.

In a preferred arrangement, the first connector is formed of a plastics material and the second connector is formed of a metal, eg stainless steel.

The first connector preferably has a weight of 0.5 g or less and preferably 0.2 grams or less.

The device may comprise a further adjustment component that can be fitted between the first or second connector and the bobbin so the device can be arranged in the following configurations:
a) the first connector connected directly to the bobbin
b) the second connector connected directly to the bobbin
c) the second connector connected to the bobbin via the adjustment component to apply three different weights to the fishing line.

The combined weight of the bobbin and the connector connected thereto and the adjustment component, when fitted thereto, in configurations a), b) and c) may be substantially 3g, 6g, and 9g, respectively.

The first and second connectors each preferably comprise a male threaded portion for securing to a female threaded portion of the rod support or a female threaded portion of the bobbin.

The female threaded portion of the rod support may be provided in a mounting component mounted on the rod support and which projects downwardly therefrom at an angle to the vertical.

The device may be provided with said mounting component which is adapted to be mounted on the rod support and/or with said bobbin.

The device may also be provided with a bobbin and the bobbin may comprise a ball clip arranged to be clipped onto a fishing line so as to be slidable along said line.

Alternatively, the device may be provided with a bobbin and the bobbin comprise a ball clip arranged to be clipped onto and to grip a fishing line.

The bobbin preferably comprises a glowing component such as a tubular isotope vial.

The length of flexible material may comprise a metal chain, eg of stainless steel, although other flexible material may be used.

The flexible chain may have a length in the range 60 - 200 mm and preferably in the range 75 - 180 mm.

Other preferred and optional features of the invention will be apparent from the following description and claims

The invention will now be described, merely by way of example, with reference to the accompanying drawings in which:
Figure 1 is a schematic diagram of a fishing line with a bite detector and illustrates use of a device according to an embodiment of the invention in such a set-up;
Figure 2 is a plan view of a device according to a first embodiment of the invention;
Figures 3A, 3B and 3C show front views of one end of the device of Figure 2 connected to the bobbin in three different configurations to provide three different tensioning weights;
Figure 4 is a side view of the device of Figure 2 when connected between a support and a bobbin in a set-up such as that shown in Figure 1; and
Figure 5 is a perspective view of the device shown in Figure 4.

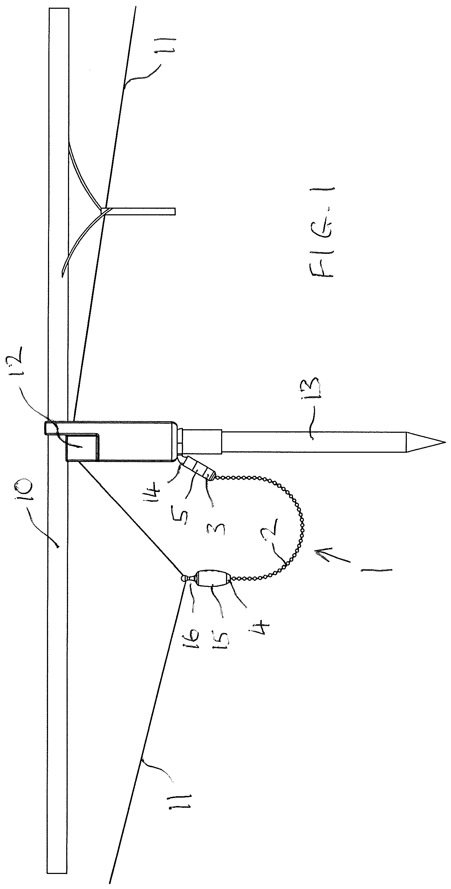

Figure 1 shows a device 1 according to an embodiment of the invention in a typical bite sensor arrangement. The figure shows a fishing rod 10, a fishing line 11 and a line movement sensor 12 which is mounted on a rod support 13, such as a bank stick.

The device 1 comprises a length of flexible material 2, having a first connector 3 at one end and a second connector 4 at the other end. The first connector 3 is releasably attached to the rod support 13 via a plastic or metal mounting component 14 which projects downwardly therefrom (this component commonly being known as a 'hockey stick') and the second connector 4 is releasably connected to a bobbin 15 which is suspended from the fishing line 11 via clips 16 so as to apply tension to the fishing line 11.

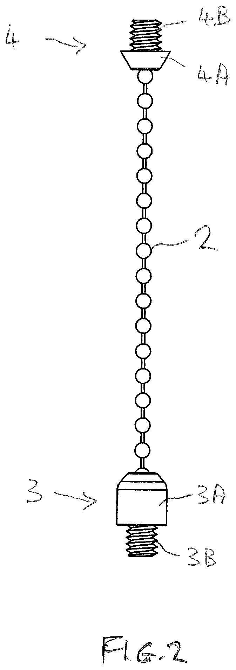

Figures 2 - 5 show the device 1 in more detail. In the embodiment shown, the line 2 comprises a flexible chain, eg of stainless steel, the first connector 3 comprises a body portion 3A and a screw thread 3B and the second connector comprises a body portion 4A and a screw thread 4B. The chain 2 may be of different lengths depending on the application but is typically in the range 75 mm to 180 mm long. The line 2 may also be formed of other flexible materials, eg it may be a filament or cord.

The connectors 3 and 4 have different weights and the male screw threads 3B and 4B are the same so the device is reversible, ie the first connector may be attached to the mounting component 14 by means of the screw thread 3B and the second connector 4 secured to the bobbin 15 by means of screw thread 4B or the first connector 3 may be attached to the bobbin 15 by means of the screw thread 3B and the second connector 4 secured to the mounting component 14 by means of screw thread 4B.

The connectors may have different weights due to their size and/or their density. The connectors may, for example both be formed of the same material, eg stainless steel, but be of a different size (as shown in Fig 2). Alternatively, the connectors may have a similar size but be formed of material having different densities, eg one being formed of metal and the other being formed of plastic. In a preferred arrangement, the connectors may have a different size and be formed of material of a different density. The connector 3 may, for example, be formed of metal, eg stainless steel, and be larger than connector 4 and connector 4 formed of a lighter material, eg plastic.

As the device is reversible and of disparate weight and/or material at its two ends, a different tension can be applied to the fishing line 11 simply by reversing the device so it is connected the other way around.

The difference between the weights of connectors 3 and 4 is preferably at least 3 grams and the lightest connector preferably has a weight of 0.5 grams or less (and typically formed of plastic) or more preferably 0.2 grams or less. It is desirable for one connector to be very light to help achieve a weight difference between the connectors whilst minimising the amount of material used in forming the connectors. In addition, if both the bobbin 15 and one of the connectors are formed of relatively light material, eg plastic, a 3 gram difference between the weights of the connectors 3 and 4 can enable the downward force applied by the bobbin 15 to the fishing line 11 to be doubled by simply reversing the way the device 1 is connected between the mounting component 14 and the bobbin 15.

In order to provide further adjustment of the tension applied to the fishing line 11, one or more additional weights 5 can be provided which have a male thread at one end and a female thread at the other end so it can be connected to the base of the bobbin 15 and a connector (3 or 4) connected to the base of the additional weigh 5.

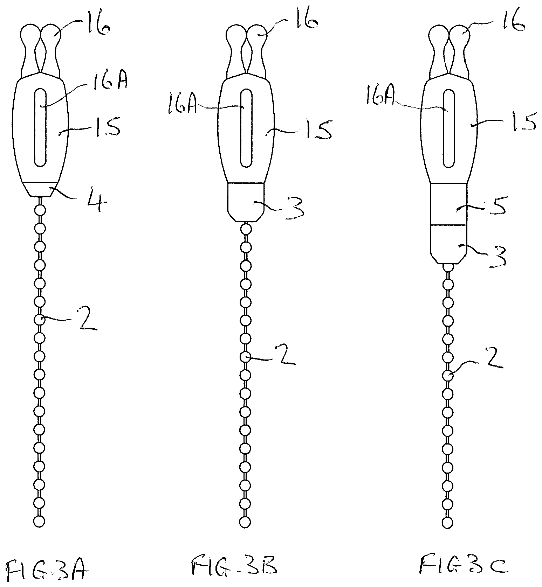

Figures 3A - 3C show three different configurations of the end of the device connected to the bobbin 15 to apply three different tensioning weights to the fishing line 11. Figure 3A shows the small connector 4 connected directly to the bobbin 15. Figure 3B shows the larger connector 3 connected directly to the bobbin 15 and Figure 3C shows the larger connector 3 connected to the bobbin via an additional weight 5. If the bobbin 15 weighs 2.8g, the small connector 4 weighs 0.2g, the large connector 3 weighs 3.2g and the additional weight 5 weighs 3g, the combined weight of the bobbin 15 and small connector 4 shown in Fig 3A may, for example, be 3 grams, the combined weight of the bobbin 15 and larger connector 3 shown in Fig 3B may be 6 grams and the combined weight of the bobbin 15, additional weight 5 and the larger connector 3 shown in Fig 3C may be 9 grams.

Thus, by providing a reversible device with different weight connectors, together with one additional weight, three different tensioning weights can be provided.

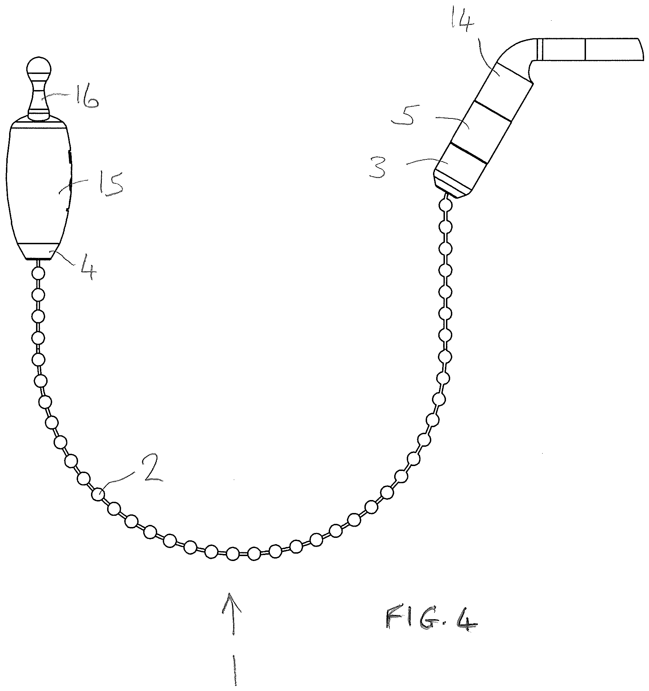

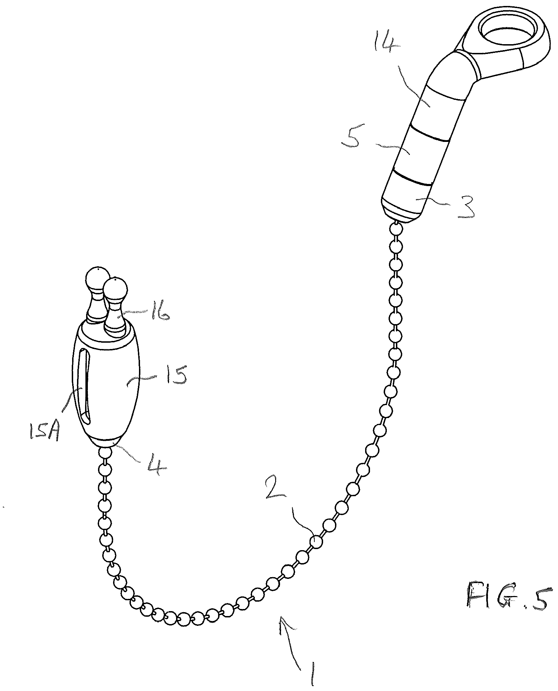

When the additional weight 5 is not required, it can conveniently be stored at the other end of the device 1, ie by fitting it between the mounting component 14 and the connector connecting the device thereto (as shown in Figures 4 and 5).

The bobbin 15 may be formed from a variety of materials, for example acrylic, PTFE or metal depending on the range of tensioning weight it is desired to provide. As described above, with a lightweight acrylic bobbin 15, the range of weights provide my, for example be: 3g, 6g and 9g. With a heavier PTFE bobbin the range of weights may be 5g, 8g and 11g and with a heavier metal bobbin, the range of weights may be 15g, 18g and 21g.

Whilst a difference of at least 3g between the different configurations is in many cases preferred, the difference may, in other cases, be smaller and larger, eg between 2g and 5g. As in the examples given, it is preferred that the different weight combinations are evenly spaced, eg there being a 3g difference between the respective configurations. However, it is possible to provide other non-uniform weight differences between the respective configurations. This may be achieved, for example, if the heavier connector 3 and the additional weight 5 are formed so as to have different weights, eg 2g and 4g or 3g and 5g, respectively. If there is a greater difference between the weight of the additional weight 5 and the weight of the larger connector 3, a fourth configuration is possible, ie the combined weight of the bobbin 15, the additional weight 5 and the smaller connector 4. With the weights mentioned above (but with the additional weight weighing 5g rather than 3g), the four configurations have combined weight sof 3g, 6g, 8g and 11g. However, for simplicity, the provision of three equally spaced weights as described in relation to Figs 3a to 3C is preferred.

As mentioned above, lightweight configurations, eg having an acrylic bobbin and a small, plastic connector 4 are desirable and in order to keep the weight of the bobbin down it preferably has a non-cylindrical shape. The upper end of the bobbin 15 needs to be wide enough to accommodate two off-centre holes for receiving a pair of clips 16 (described further below) for attaching the bobbin 15 to the line 11 but the lower end need only be wide enough to accommodate the screw threads of the connectors 3 and 4 and so is typically narrower than the upper end. The upper end of the bobbin may for example be around 10 mm wide and the bottom end around 6 - 8 mm wide. The bobbin 15 may thus have a substantially frusto-conical shape or a tapered barrel shape. It is also desirable for the bobbin 15 to have smooth, rounded contours so as to blend with the clips 16 at one end and the connector at the other and to avoid corners or edges which might snag on a fishing line.

The additional weight 5 referred to above preferably has a substantially cylindrical body portion of a similar diameter to the connectors 3 and 4m, eg with a diameter of around 7 - 8 mm, and typically has a length of around 10 mm.

It will be appreciated that the screw threads provided in both the connectors 3 and 4, the bottom end of the bobbin 15, the mounting component 14 and both ends of the additional weight 5 should all be compatible, ie of the same pitch and diameter, so that they all fit with each other.

As shown in Figure 5, a lengthwise slot 15A is also provided in a side of the bobbin 15. This is designed to receive a glowing component in the form of a tubular isotope vial to provide a light on the bobbin so it is clearly visible during night fishing. The isotope vial (not shown) is encased in a clear pliable sleeve, eg formed of a thermo plastic rubber, and dimensioned to be an interference fit within the slot 15A so that the relatively fragile and expensive glass vial is protected. The slot 15A in the bobbin 15 is arranged so that in use it is orientated to face the angler. The isotope vial can also be secured in the slot 15A by adhesive. This arrangement is preferred to the conventional practice of mounting the isotope inside a coloured, translucent bobbin as this tends to reduce the brightness of the light emitted.

Figures 4 and 5 also show the clips 16 on the top of the bobbin 15 more detail. These comprise a pair of round head ball clips 16 mounted in the top of the bobbin 15 so the round heads just touch each other (or lie very close to each other). In use, the fishing line 11 is pushed between the heads and into the channel beneath the heads so the bobbin 15 is free to slide along the fishing line 11.

The bobbin 15 may also be provided with a second pair of rounded and elongated gripping clips which are similar to those described above except that the heads each have a flat surface where they touch (or face) each other. In use, the fishing line 11 is pushed between the heads so as to be gripped by these flat surfaces so, in this case, the bobbin 15 is not able to slide along the fishing line 11.

These two types of clips are known but the clips are permanently secured to the bobbin so in order to switch between the two types of clip a different bobbin has to be used. In the arrangement shown the clips 16 are screwed into the top of the bobbin 15 so they are interchangeable. This requires two off-centre screw holes to be provided in the top of the bobbin and to be positioned and angled with a high degree of accuracy to ensure the heads of the clips touch each other (or lie very close to each other) as described above.

The clips 16 may also be designed for use with fishing lines of different diameters. For the gripping clips this requires the gripping surfaces to be spaced from each other by slightly different distances depending on the thickness of the fishing line. The angler can thus mount the appropriate set of clips to the bobbin 15 rather than having to use a different bobbin for each case. This helps reduce cost, especially for bobbins 15 provided with a relatively expensive isotope tube.

## Claims

1. A device for applying tension to a fishing line comprising a length of flexible material having a first connector at one end and a second connector at the other end, the first connector being adapted for releasable attachment to a rod support and the second connector being adapted for releasable connection to a bobbin arranged to be suspended from the fishing line so as to apply tension thereto, the device being reversible so the first connector can also be releasably connected to the bobbin and the second connector releasably secured to the rod support, the first and second connectors being formed of materials of different densities and/or having different weights so a different tension is applied to the line depending which way around the device is connected.

2. A device as claimed in claim 1 in which the one of the connectors is at least 3 grams heavier than the other.

3. A device as claimed in claim 1 or 2 in which the first connector is formed of a plastics material and the second connector is formed of a metal.

4. A device as claimed in any preceding claim in which the first connector has a weight of 0.5 g or less and preferably 0.2 grams or less.

5. A device as claimed in any preceding claim comprising a further adjustment component that can be fitted between the first or second connector and the bobbin so the device can be arranged in the following configurations:
a) the first connector connected directly to the bobbin
b) the second connector connected directly to the bobbin
c) the second connector connected to the bobbin via the adjustment component to apply three different weights to the fishing line.

6. A device as claimed in claim 6 in which the combined weight of the bobbin and the connector connected thereto and the adjustment component, when fitted thereto, in configurations a), b) and c) is substantially 3g, 6g, and 9g, respectively.

7. A device as claimed in any preceding claim in which the first and second connectors each comprise a male threaded portion for securing to a female threaded portion of the rod support or a female threaded portion of the bobbin.

8. A device as claimed in claim 7 in which the female threaded portion of the rod support is provided in a mounting component mounted on the rod support and which projects downwardly therefrom at an angle to the vertical.

9. A device as claimed in claim 8 which is provided with said mounting component which is adapted to be mounted on the rod support and/or with said bobbin.

10. A device as claimed in claim 9 provided with a bobbin and in which the bobbin comprises a ball clip arranged to be clipped onto a fishing line so as to be slidable along said line.

11. A device as claimed in claim 9 provided with a bobbin and in which the bobbin comprises a ball clip arranged to be clipped onto and to grip a fishing line.

12. A device as claimed in claim 9, 10 or 11 provided with a bobbin in which the bobbin comprises a glowing component.

13. A device as claimed in any preceding claim in which the length of flexible material comprises a metal chain.

14. A device as claimed in claim 13 in which the flexible chain has a length in the range 60 - 200 mm and preferably in the range 75 - 180 mm.
